**Europäisches Patentamt**

**European Patent Office**

**Office européen des brevets**

(19)

(11) Veröffentlichungsnummer : **0 176 758**
**B1**

(12)

# EUROPÄISCHE PATENTSCHRIFT

(45) Veröffentlichungstag der Patentschrift :
22.02.89

(51) Int. Cl.⁴ : **B 62 D 55/06, B 62 D 55/24**

(21) Anmeldenummer : 85110729.2

(22) Anmeldetag : 27.08.85

(54) **Fluidtransportraupe.**

(30) Priorität : **05.09.84 DD 267122**

(43) Veröffentlichungstag der Anmeldung :
**09.04.86 Patentblatt 86/15**

(45) Bekanntmachung des Hinweises auf die Patenterteilung : **22.02.89 Patentblatt 89/08**

(84) Benannte Vertragsstaaten :
**AT DE FR GB IT SE**

(56) Entgegenhaltungen :
**DE–B– 1 255 503
DE–B– 1 278 848
US–A– 3 582 154**

(73) Patentinhaber : **Bauakademie der Deutschen Demokratischen Republik
Plauener Strasse 163/165
DDR-1125 Berlin (DD)**

(72) Erfinder : **Zschocke, Christian
Strasse der Befreiung 73 a
DDR-9383 Erdmannsdorf-Augustusburg (DD)**

(74) Vertreter : **Puchberger, Georg, Dipl.-Ing. et al
Patentanwälte Dipl.-Ing. Georg Puchberger Dipl.-Ing.
Rolf Puchberger Dipl.-Ing. Peter Puchberger Singerstrasse 13 Postfach 55
A-1010 Wien (AT)**

**Beschreibung**

Die Erfindung betrifft eine Fluid-Transportraupe, die geeignet ist, vorzugsweise schwere Montagetransporte auf Kurzstrecken zu realisieren. Das Konstruktions- und Wirkprinzip erfüllt eine Forderung nach hoher Leistung bei geringer Eigenmasse der Vorrichtung und kleinen Abmessungen.

Folglich gestaltet sich eine günstige Anbauvariation im Huckepackverfahren für verschiedenste Montageobjekte bzw. Aggregate.

Bekannt sind Raupenkettenfahrzeuge, raupenkettengetragene Baumaschinen und Raupen-Schwerlasttransporter für Huckepack-Technologien.

Das einheitliche Konstruktionsprinzip dieser Raupenfahrwerke ist die Mehrfachanordnung von Tragrädern, Laufrädern und Antriebsrädern, über die eine aus Glieder gespannte Gleiskette endlos gelegt ist. Dadurch wird der radbedingte hohe Bodendruck in einen lastverteilenden niedrigen Flächendruck umgewandelt. Die Lauf- und Stützräder rollen auf der Gleiskette ab und bewegen dabei das Fahrzeug vorwärts.

Die Gleiskette unterliegt in den Gelenken einer hohen mechanischen Beanspruchung. Infolge des Bodenkontaktes erfährt die Kette eine hohe Verschleißwirkung. Bei schnellfahrenden Fahrzeugen ist der Kettenverschleiß stets ein Kompromiß von Lebensdauer und konstruktivem Aufwand. Die gesamte Kraftübertragung erfolgt über das Rädersystem mit der erforderlichen Dimensionierung dieses Systems, wie Rad, Lagerung, Rahmen und Gleiskette. Vom Konstruktionsprinzip ist die räumliche Anordnung der Baugruppen des Raupenfahrwerkes bestimmt. Im allgemeinen sind die Raupenfahrzeuge schwere Konstruktionen.

Auch sind Luftkissen-Raupenfahrzeuge bekannt, in denen ein oder mehrere Luftkissen von einem Raupenband umschlossen sind und die Innenfläche der Raupe die Gleitfläche des Luftkissens bildet. Solche Fahrzeuge sind nach den Erfindungsbeschreibungen DE-A-2 329 727 und FR-A- 2 164 021 bekannt.

Das nach bekannten Vorrichtungen durch das Raupenband belastete Luftkissen ist für höhere Seitenkräfte aus Querdrift und Lenkeinschlag technisch nicht beherrschbar. Die erforderliche Sensibilität für das Luftkissen ist auch durch das in Gliederelemente aufgelöste Raupenband bei Bodenunebenheiten nicht im ausreichenden Maße gegeben und die Wirkung des Luftkissens ist gestört.

Weiterhin ist ein Transportfahrzeug gemäß der Erfindungsbeschreibung FR-A-2 149 388 bekannt, das auf einem Raupenfahrwerk mit gummiartigem Raupenband bewegt wird. Das Raupenfahrwerk ist hierbei so angeordnet, daß es die Grundfläche des Fahrzeuges luft- und druckdicht umschließt und einen Raum zur Bodenfläche hin freiläßt, in dem ein Luftkissen aufgebaut werden kann. Das Luftkissen stützt sich gegen die Tragplatte des Fahrzeuges, gegen die Fahrbahn und gegen das Luftkissen allseitig umschließende Raupenfahrwerk ab.

Der Einsatz dieses Transportfahrzeuges erfordert eine stabile, völlig glatte und ebene Fahrbahn. Die horizontale Bewegung erfolgt durch zusätzliche Zug- und Bremseinrichtungen.

Die technische Aufgabe, die mit der Erfindung gelöst werden soll, besteht darin, ein Raupenfahrzeug mit elastischer Karkasse und fluidischem Tragsystem ohne Rädertrageinrichtung und mit den Vorteilen kleiner Bauabmessungen geringer Konstruktionsmasse und hermetisch geschlossener Bauweise zu schaffen.

Das Raupenfahrzeug soll selbständig fahrbar und manövrierfähig sein ohne Verwendung von Gleitbahnen oder einer besonderen Vorbehandlung des Transportweges. Erfindungsgemäß wird die Aufgabe durch die Entwicklung einer Fluidtransportraupe dadurch gelöst, daß über einen biege- und verwendungssteifen Stator, dessen Grundform einem Raupenkörper entspricht, ein endloses flexibles flüssigkeits- und druckdichtes Raupenband über seine gesamte Breite gespannt ist. Dieser Stator enthält druckdichte Zellen als Druckbehälter für das Fluid. Gleichmäßig über die Statorbreite sind bodenseitig Kanäle verteilt, die von diesen Zellen zur unteren Außenfläche des Stators führen.

Zentral im Stator ist für das Fluid eine Auffangwanne angeordnet, die über eine Öffnung mit der oberen Außenfläche des Stators und über ein Rohrsystem mit den druckdichten Zellen verbunden ist.

Der Stator ist beidseitig druckdicht verschlossen durch Seitenwände, die soweit überstehen, daß zwischen ihnen und dem Raupenband eine Dichtung erfolgen kann. Die dem Stator zugewandte Oberfläche des Raupenbandes weist eine Struktur aus nach außen hin offenen Zellen mit elastischen Zellwänden auf. Das Raupenband enthält bekannte nicht starre Armierungen, die durch in gleichmäßigem Abstand und gleicher Länge beidseitig hervorstehende Stützkörper, die so eine Rollenkette bilden, gegen die allseitig überstehenden Seitenwände des Stators gestützt und geführt sind. Diese beidseitig angeordneten Rollenketten sind kraftschlüssig geführt über Radscheiben, die beidseitig außen am Stator in den Umlenkpunkten des Raupenbandes anliegen, in bekannter Weise von einem Antriebsaggregat getrieben, aber am Tragverhalten nicht beteiligt sind.

Die folgenden Weiterbildungen der Erfindung sind in den abhängigen Patentansprüchen 2 bis 8 enthalten.

Das zur Funktion der Fluidtransportraupe erforderliche Druckfluid wird durch eine Umwälzpumpe von der zentral angeordneten Auffangwanne über Rohrleitungen in die druckdichten Zellen des Stators und weiter über Kanäle zur Bildung des Fluidspaltes zwischen Stator und Raupenband geleitet. Dabei werden auch die waben-oder napfartigen hydrostatischen Zellen der inneren Gleitschicht des Raupenbandes gefüllt.

Bei glatter Bodenfläche wird ein gleichmäßiger hydrostatischer Fluidspalt aufrecht erhalten. Treten Unebenheiten auf während der Bewegung der Raupe, so entstehen lokale Druckspitzen zwischen dem elastischen Raupenband und dem Stator. Das in der hydrostatischen Zelle eingeschlossene Fluid nimmt bei nur geringer Verformung der Zellwand und geringer Kompressibilität diesen Druck auf. Dabei gleiten die Zellwandlippen als Dichtelemente reibungsarm an der glatten Oberfläche des Stators. Die dichte Anordnung hydrostatischer Zellen während der Translation vom Raupenband gegen den Stator kompensiert die Druckspitzen aus Unebenheiten der Bodenfläche mit Unterstützung des verformbaren Raupenbandes. Hat der Raupenkörper die Unebenheit überquert, werden die betreffenden Zellen hydrostatisch entlastet.

Das in Längs- und Querrichtung aus dem Fluidspalt abfließende Fluid wird nach der Oberseite des Stators verdrängt, fließt über eine Bohrung in die Auffangwanne zurück und wird erneut dem Kreislauf durch die Umwälzpumpe zugeführt.

Die Lasteintragung erfolgt in das Zentrum des Stators über bewegliche Achsen. Bei Anordnung zweier parallel laufender Raupenkörper mit Differentialantrieb bekannter Bauart ist das System in bekannter Weise lenkbar.

Unter Fluid werden Öle, Emulsionen oder Wasser verstanden.

Die durch die Erfindung erreichten Vorteile sind im wesentlichen darin zu sehen, daß der Transport schwerer Lasten ohne Verwendung von Gleitbahnen und ohne Benutzung fremder Hilfsmittel als Zug- und Bremseinrichtungen mit dieser erfindungsgemäßen Fluidtransportraupe durchgeführt wird.

Das Verhältnis Eigenmasse des Transportmittels zur Transportobjektmasse ist deutlich zugunsten der geringen Transportmittelmasse verlagert.

Durch Reduzierung der Abmessungen ist die Anpassungsfähigkeit an das Transportobjekt verbessert. Damit sind die Einsatzmöglichkeiten erweitert, der Energieverbrauch ist gesenkt und die Transportkosten sind vergleichsweise gering.

Die Erfindung soll am nachstehenden Ausführungsbeispiel näher erläutert werden.

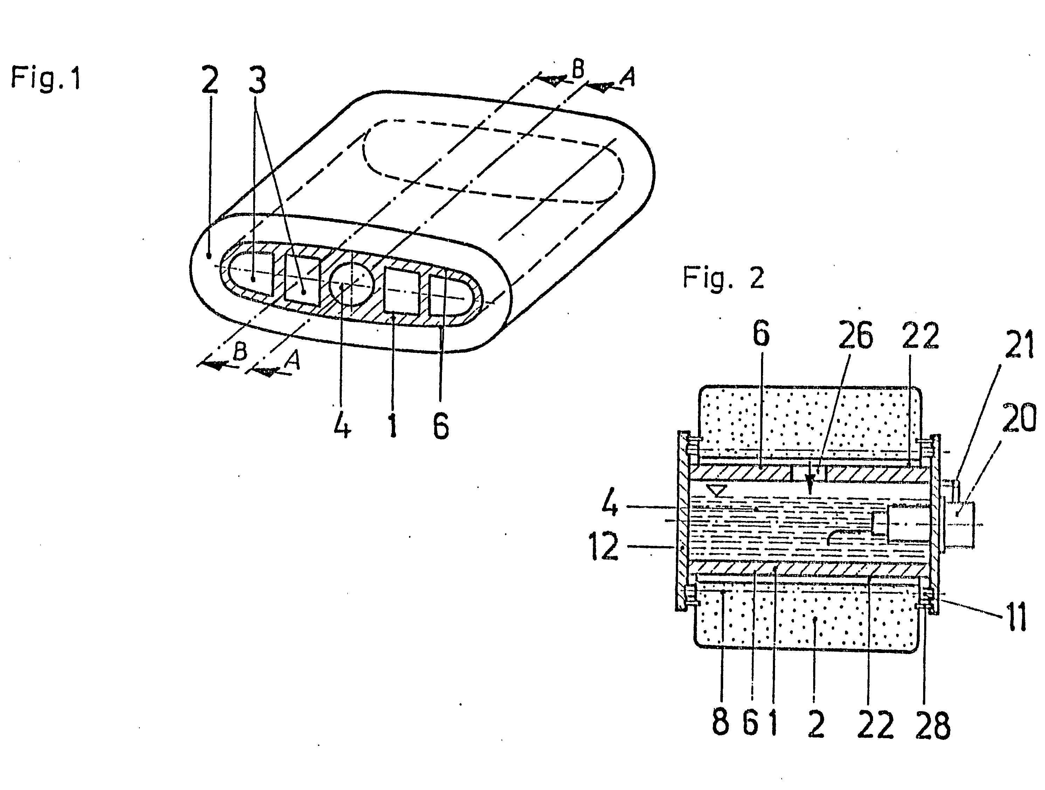

Fig. 1 Räumliche Darstellung des Raupenkörpers ohne seitliche Abdeckung

Fig. 2 Schnitt A-A durch die Stabachse der Raupenkörper nach Fig. 1

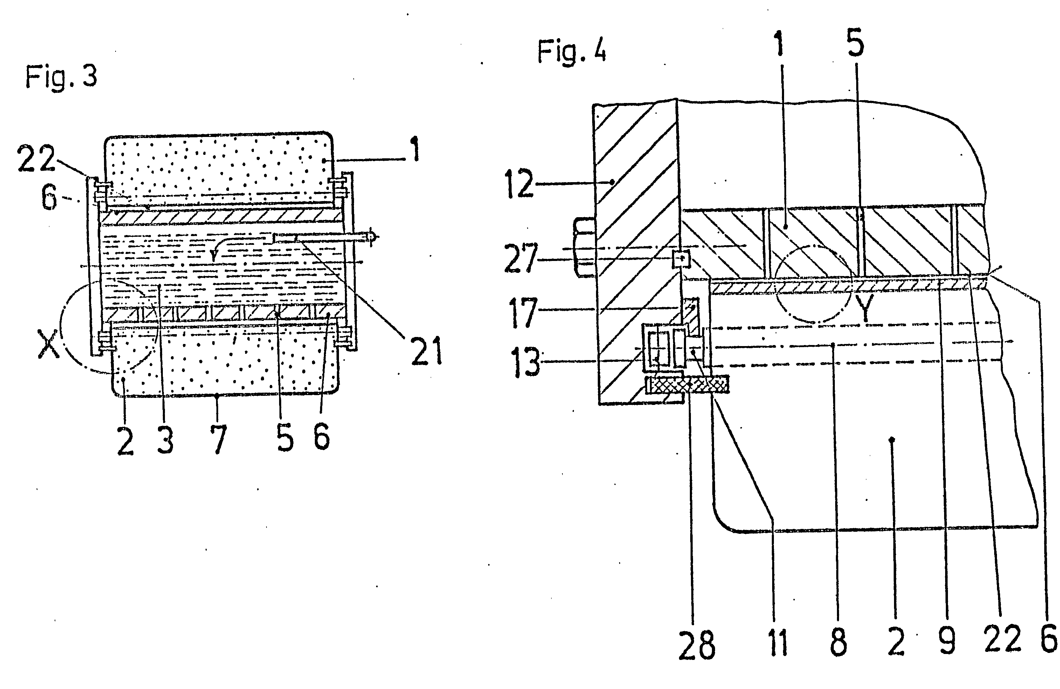

Fig. 3 Schnitt B-B durch Statorzelle des Raupenkörpers nach Fig. 2

Fig. 4 Einzelheit X im Randbereich des Raupenbandes nach Fig. 3

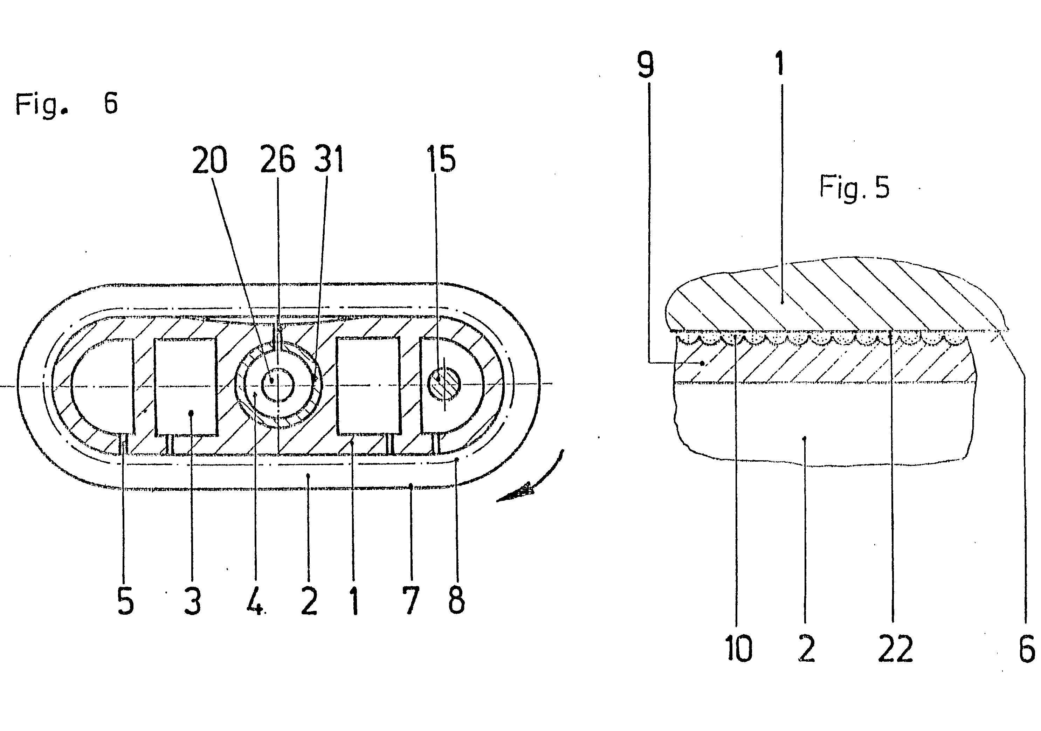

Fig. 5 Einzelheit Y der inneren Gleitschicht des Raupenbandes nach Fig. 4

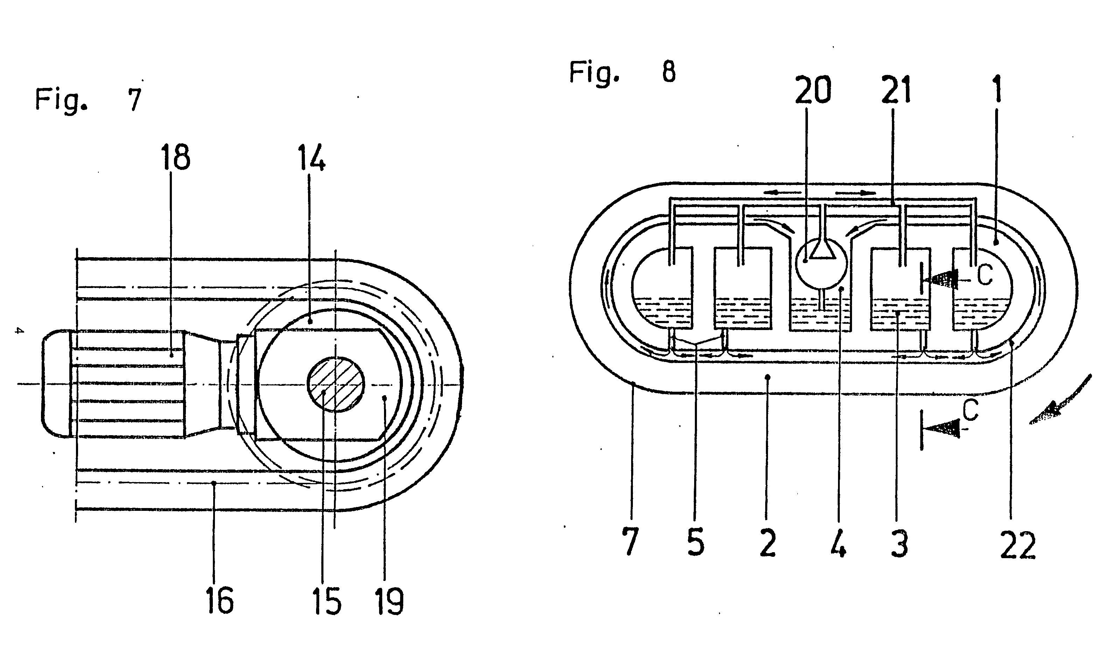

Fig. 6 Längsschnitt durch den Raupenkörper

Fig. 7 Teildarstellung des Antriebes der Raupe

Fig. 8 Schematische Darstellung des Fluidumlaufes

Fig. 9 Schematische Darstellung Teilschnitt C-C nach Fig. 8 (ohne Berücksichtigung konstruktiver Einzelheiten)

Fig. 10 Darstellung des Wirkprinzips der hydrostatischen Zelle

Fig. 10.1 Einzelheit Y nach Fig. 10

Fig. 10.2 Einzelheit X nach Fig. 10

Fig. 10.3 Innere Oberflächenstruktur des Raupenbandes

Fig. 11 Darstellung der bekannten hydrostatischen Lagerung bei Paarung harter Werkstoffe

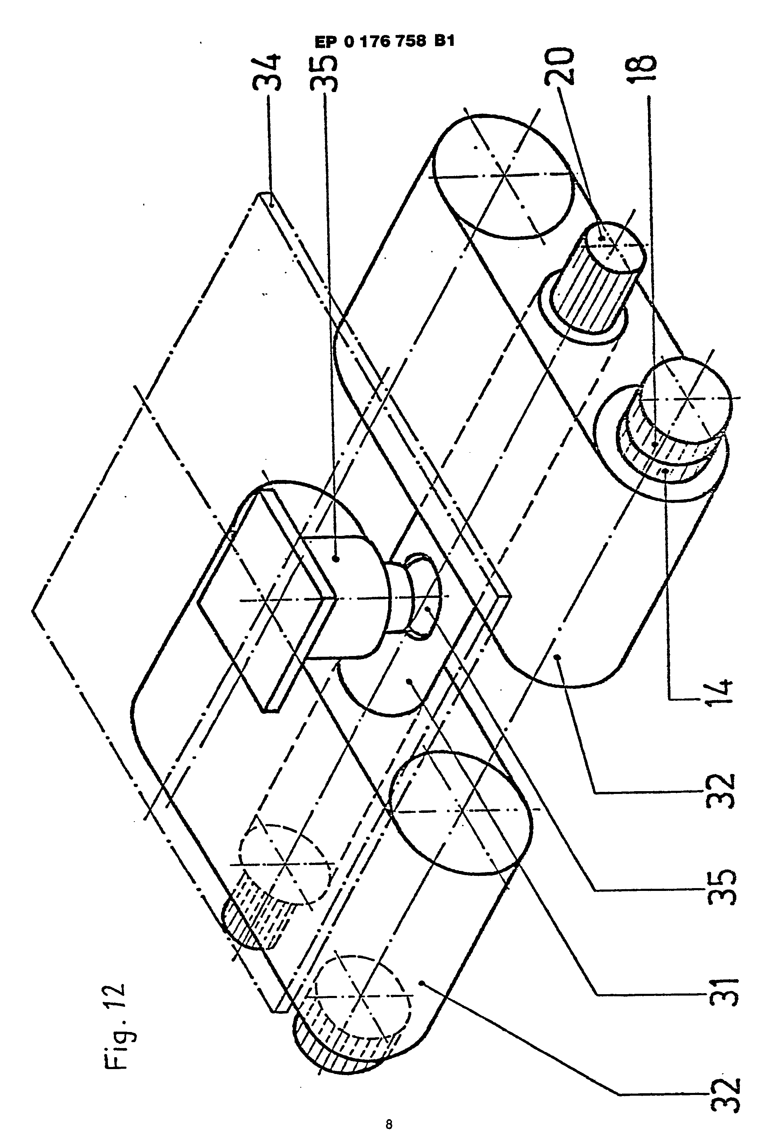

Fig. 12 Räumliche Darstellung einer Fluidtransportraupe mit elektrischem Antriebsaggregat.

Über einen Stator 1 in Form des Raupenkörpers 32 ist ein endloses flexibles Raupenband 2 mit homogener oder zelliger Struktur aus gummiartigem Material gespannt. Der Stator 1 als tragender Baukörper der Vorrichtung ist in druckdichte Zellen 3, 4 aufgelöst, die über Kanäle 5 bodenseitig mit der Gleitfläche 6 des Stators 1 in Verbindung stehen.

Die Kanäle 5 sind über die Breite der Bodenseite des Stators 1 verteilt. Sie sind in den beidseitigen Endzonen der Bodenseite konzentriert. Im mittleren Bereich der Bodenseite sind weniger Kanäle angeordnet. Das endlose flexible Raupenhand 2 besteht in seiner äußeren mit der Bodenfläche 7 in Berührung kommenden Schicht aus einem verschleißfesten und elastischen Material. Im Inneren des Raupenbandes 2 befindet sich ein Festigkeitsträger 8, bestehend aus Einlagen bekannter Armierungen, einem Stahlseilnetz oder einem Kettenband. Der Festigkeitsträger 8 ist in das elastische Material eingebettet, wobei die Einlage nahe der inneren Gleitschicht 9 angeordnet ist.

Die Gleitschicht 9 des Raupenbandes 2 besteht aus einer strukturierten in Einzelzellen 10 aufgelösten Oberfläche, vorzugsweise wabenförmiger oder napfartiger Struktur 36. Der Festigkeitskörper 8 im Raupenband 2 stützt sich über seine beidseitig hervorstehenden metallischen Stützkörper 11 gegen die Seitenwände 12 des Stators 1.

Diese Abstützung erfolgt im Beispiel mit einer bekannten käfiglosen Rollenführung 13.

Der Antrieb des Raupenbandes 2 erfolgt vorzugsweise über außen liegende am Tragverhalten nicht beteiligte Radscheiben 14, die mit der Welle 15 verbunden sind und über Rollenketten das Raupenband 2 antreiben. Dabei dienen die vorstehenden Stützkörper 11 als Rollenkette 16.

Die Rollenkette 16 wird durch die Leiste 17 abgestützt. Das Antriebsaggregat 18 treibt über ein Getriebe 19 die Radscheibe 14 an.

Das zur Funktion der Fluidtransportraupe erforderliche Druckfluid wird durch eine Umwälzpumpe 20 über Rohrleitungen 21 in die Zellen 3 des Stators 1 und über die Kanäle 5 zur Füllung des hydrostatischen Fluidspaltes 22 geleitet. Dabei werden auch die hydrostatischen Zellen 10 der inneren Gleitschicht 9 gefüllt.

Der hydrostatische Druck 37 des Systems, innerhalb der Zellen 3, übersteigt geringfügig den Quotienten des Gesamtgewichtes, gebildet aus Vorrichtung und Transportobjekt, zu der Auflagefläche. Er reduziert sich im Kanal 5 auf den relativen Druck 38. Der zwischen Stator 1 und Raupenband 2 aufgebaute hydrostatische Fluidspalt 22 wird so lange aufrecht erhalten, bis bodenseitig keine Unebenheiten auftreten.

Bei Auftreten von Unebenheiten entstehen während der Bewegung der Raupe lokale Druckspitzen zwischen elastischem Raupenband 2 und Stator 1.

Das in der hydrostatischen Zelle 10 eingeschlossene Fluid nimmt bei nur geringer Verformung der Zellwand 23 und geringer Kompressibilität diesen Druck auf. Es entsteht der lokale Maximaldruck 39.

Die Zellwandlippe 24 gleitet dabei als Dichtelement reibungsarm an der glatten Oberfläche des Stators 1.

Die dichte Anordnung hydrostatischer Zellen während der Translation von Raupenband 2 gegen den Stator 1 kompensiert die Druckspitzen 40 aus Unebenheiten der Bodenfläche 7. Die Zelle 10 wird erst hydrostatisch entlastet, wenn der Raupenkörper die Unebenheit überquert hat. Das in Längs- und Querrichtung aus dem hydrostatischen Fluidspalt 22 abfließende Fluid wird nach der Oberseite des Stators 1 verdrängt, fließt über die Öffnung 26 in eine Auffangwanne 4 und wird erneut dem Kreislauf durch die Pumpe 20 zugeführt.

Das Wirkprinzip der hydrostatischen Zelle gewährleistet in der Randzone 25 quer zur Laufrichtung auf sehr kurzer Strecke und längs zur Laufrichtung in der Umschlingung der Kontur des Stators mit geringem Fluidverlust den erforderlichen Druckabbau.

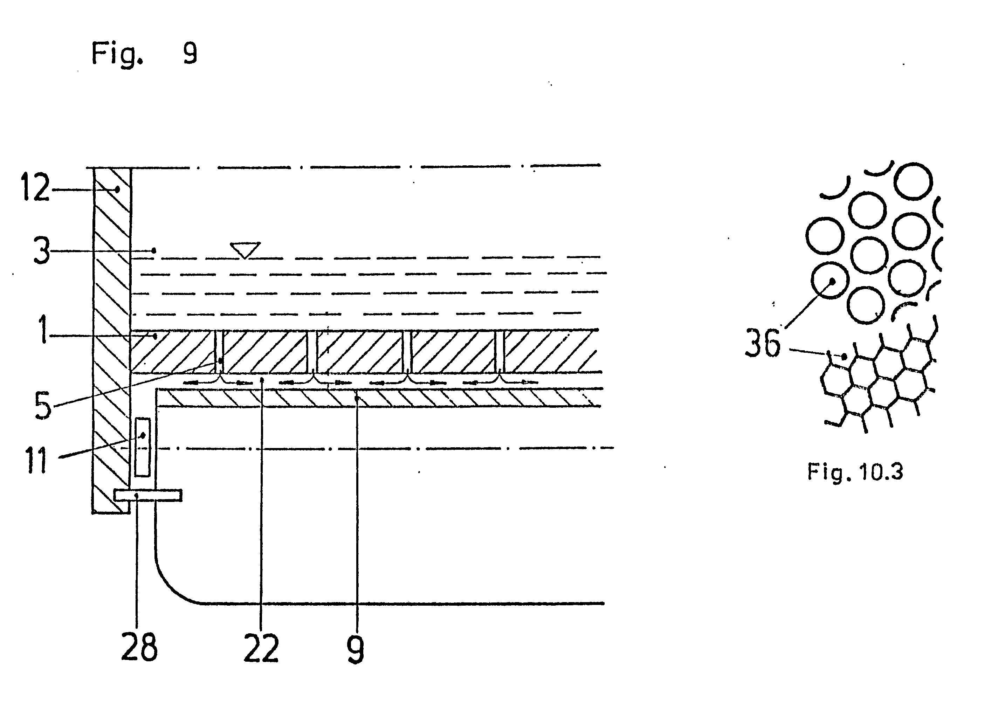

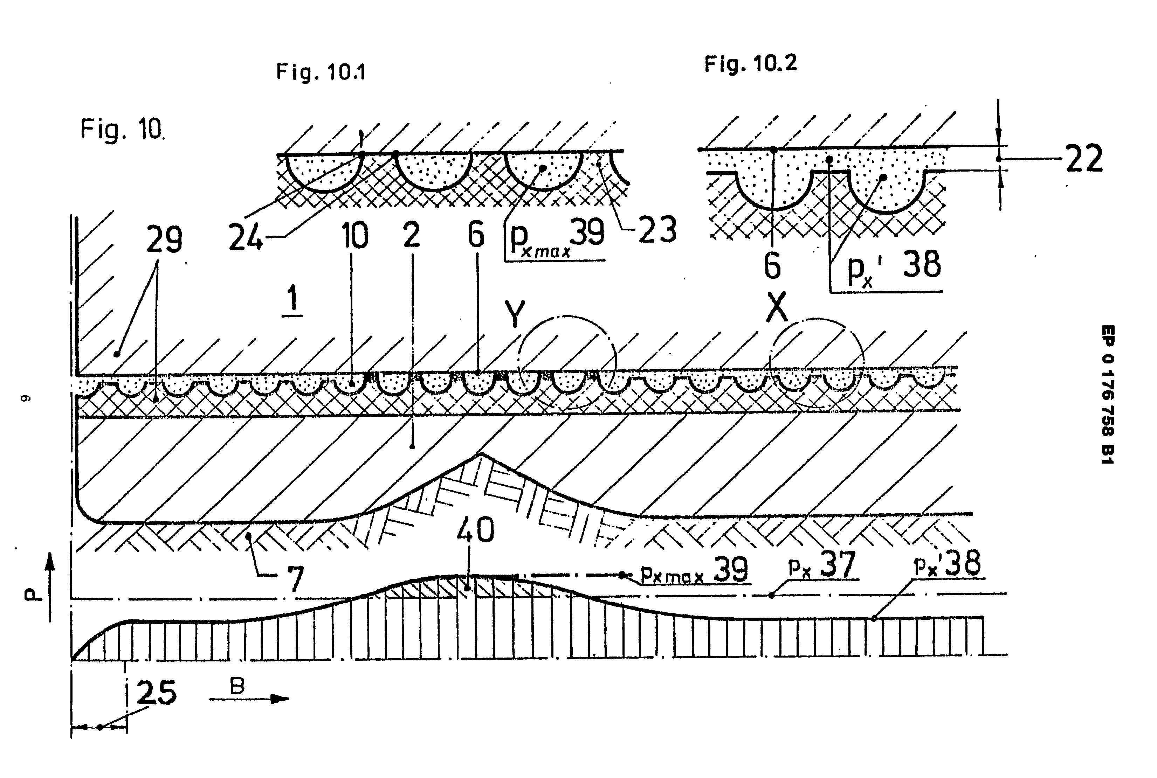

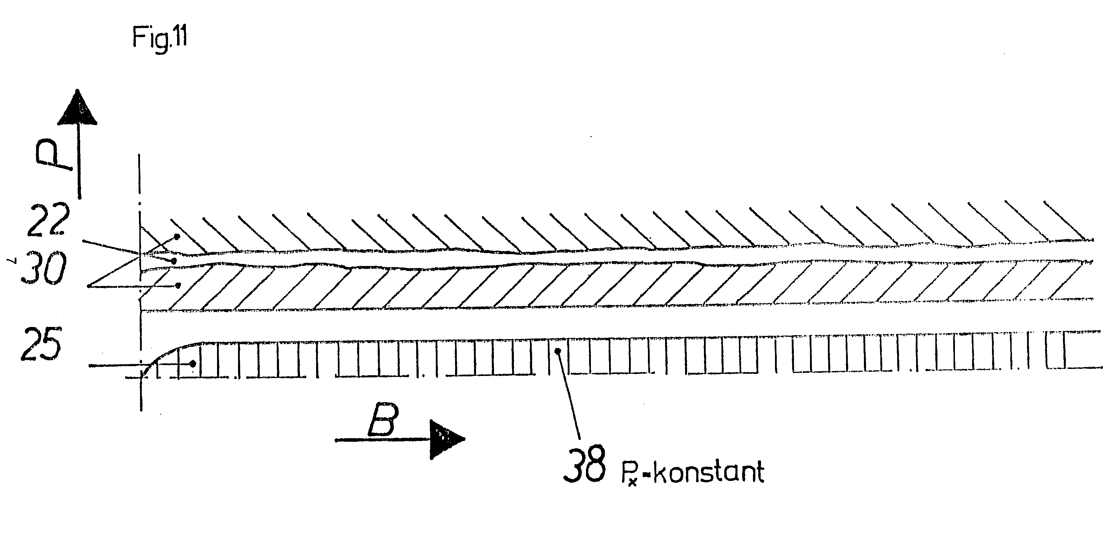

Entsprechend Figuren 10 und 11 wird das Wirkprinzip der hydrostatischen Zelle bei Werkstoffpaarung harter Fläche gegen elastische Fläche 29 im Verhältnis zur bekannten hydrostatischen Lagerung zweier fester Körper 30 mit vergleichsweise glatter Oberfläche dargestellt.

In der Belastungszone mit überhöhter bodenseitiger Druckbeanspruchung 40, hervorgerufen durch Welligkeit der Bodenfläche 7, wird der homogene hydrostatische Fluidspalt 22 unterbrochen, in dem die Lippen 24 der auslaufenden Zellwände 23 die harte Gleitfläche 6 des Stators 1 berühren und fortschreitend die Fluidverdrängung aus der Zelle 10 verhindern.

Damit baut sich in der Zelle 10 ein äquivalenter Druck 39 auf, der wesentlich höher ist, als der mittlere hydrostatische Druck 37, 38 im übrigen Drucksystem. Jede Lippe 24 entwickelt anteilig ein bestimmtes Druckintervall entsprechend ihrer konstruktiv bedingten geometrischen Stützkontur.

Die Lasteintragung erfolgt in das Zentrum des Stators 1 über bewegliche Achsen 31. Es besteht die Möglichkeit, die Umwälzpumpe 20 in der Hohlachse unterzubringen. Bei Anordnung zweier parallel laufender Raupenkörper 32 mit Differentialantrieb bekannter Bauart ist das System in bekannter Weise lenkbar.

Die mittige Anordnung eines hydraulischen Hubzylinders 33 erweitert den Einsatzbereich dieser Vorrichtung. An der Flanschplatte des Hubzylinders 33 kann das Transportobjekt bzw. ein aufgesattelter Lasttisch 34 befestigt werden. Die Anlenkung des Hydrozylinders 33 erfolgt in der Achse vorzugsweise mit Kugelanschluß 35.

Unter Fluid werden Öle, Emulsionen oder Wasser verstanden.

## Patentansprüche

1. Fluidtransportraupe mit einem der Grundform der Raupe entsprechenden biege- und verwindungssteifen Stator (1), über dem ein endloses flexibles, flüssigkeits- und druckdichtes Raupenband (2) über seine gesamte Breite gespannt ist, wobei dieser Stator (1) fluidaufnehmende bzw. fluidabgebende druckdichte Zellen (3, 4) umschließt, die über gleichmäßig über die Statorbreite verteilte Kanäle (5) mit der bodenseitigen Gleitfläche des Stators (1) in Verbindung stehen, wobei zwischen Stator (1) und Raupenband (2), bedingt durch das unter Druck eingeleitete Fluid ein umlaufender Fluidspalt (22) gebildet ist und wobei im Stator (1) zentral eine Auffangwanne (4) angeordnet ist, die über eine Öffnung (26) mit dem der Bodenfläche (7) gegenüberliegenden Fluidspalt (22) verbunden ist, wobei der Stator (1) beidseitig durch Seitenwände (12), die weniger als die Dicke des Raupenbandes (2) allseitig überstehen, druckdicht verschlossen ist, wobei die dem Stator (1) zugewandte Gleitschicht (9) des Raupenbandes (2) eine strukturierte Oberfläche aus hydrostatischen Zellen, das heißt zur Oberfläche hin offene Zellen mit elastischen Zellwänden (23) aufweist, wobei in dem flexiblen Raupenband (2) bekannte nicht starre Armierungen als Festigkeitsträger (8) in Verbindung mit quer angeordneten Stäben als Stützkörper (11) in gleichmäßigen Abständen eingelagert sind, die beidseitig eine Rollenkette (16) bildend hervorstehen und gegen die allseitig überstehenden Seitenwände (12) des Stators (1) vollends abgestützt und geführt sind, wobei in den Umlenkpunkten des Raupenbandes (2) beidseitig außen am Stator (1) anliegende und am Tragverhalten nicht beteiligte Radscheiben (14) angeordnet sind, die in bekannter Weise von einem Antriebsaggregat (18) angetrieben sind und über die die Rollenketten (16) kraftschlüssig geführt sind und wobei das Raupenband (2) beidseitig mit der jeweiligen Seitenwand (12) des Stators (1), umlaufend flüssigkeitsdicht verbunden ist.

2. Fluidtransportraupe nach Anspruch 1 gekennzeichnet dadurch, daß ein geschlossener Druck-Fluidkreislauf durch ein druckdichtes System gebildet ist, das besteht aus Auffangwanne (4), Umwälzpumpe (20), Zuführungsleitungen (21), Zellen (3), Kanäle (5), umlaufender Fluidspalt (22) zwischen Stator (1) und Raupenband (2), Einlauföffnung (26) und wiederum Auffangwanne (4).

3. Fluidtransportraupe nach Anspruch 1 dadurch gekennzeichnet, daß die von den druckdichten Zellen (3) im Stator (1) zur bodenseitigen Gleitfläche (6) hin führenden Kanäle (5) konzentriert in den beidseitigen Endzonen der bodenseitigen Gleitfläche (6) angeordnet sind.

4. Fluidtransportraupe nach Anspruch 1 gekennzeichnet dadurch, daß das endlose flexible Raupenband (2) auf der nach außen gerichteten Oberfläche eine verschleißfeste Schicht und im inneren eine homogene oder zellige Struktur aufweist.

5. Fluidtransportraupe nach Anspruch 1 gekennzeichnet dadurch, daß das endlose flexible Raupenband (2) auf der zum Stator (1) hin gerichteten Oberfläche eine wabenförmige Struktur (36) aufweist, die aus napfartigen Zellen besteht, deren Zellwände (23) in Richtung Oberfläche lippenartig auslaufen.

6. Fluidtransportraupe nach Ansprüchen 1 bis 5 dadurch gekennzeichnet, daß im Zentrum des Stators (1) eine starre oder bewegliche die Last eintragende Achse (31) in bekannter Weise gelagert ist.

7. Fluidtransportraupe nach Ansprüchen 1 bis 6 dadurch gekennzeichnet, daß zwei parallel laufende Raupenkörper mit bekanntem Differentialantrieb als lenkbare Einheit angeordnet sind.

8. Fluidtransportraupe nach Ansprüchen 1 bis 7 dadurch gekennzeichnet, daß als Fluid hydraulische Öle, Emulsionen oder Wasser eingespeist sind.

## Claims

1. Fluid transport caterpillar with a bending-resistant and twisting-resistant stator (1) corresponding to the basic shape of the caterpillar and over which is tensioned an endless, flexible, liquid and pressure-tight caterpillar belt (2) over the entire width thereof, said stator (1) surrounding fluid-receiving or fluid-dispensing, pressure-tight cells (3, 4), which are connected to the ground-side sliding surface of the stator (1) by means of channels (5) uniformly distributed over the stator width, whereby as a result of the fluid introduced under pressure, an all-round fluid gap (22) is formed between the stator (1) and the caterpillar belt (2) and whereby a collecting tank (4) is arranged centrally in stator (1) and is connected by means of an opening (26) to the fluid gap (22) facing the ground surface (7), the stator (1) being closed in pressure-tight manner on either side by side walls (12), which project on all sides less than the thickness of the caterpillar belt (2) and in which the sliding Layer (9) of caterpillar belt (2) facing the stator (1) has a structured surface formed from hydrostatic cells, i. e. towards the surface has open cells with elastic cell walls (23), whereby in the flexible caterpillar belt (2) are incorporated at uniform intervals know, non-rigid reinforcements as strength-giving members (8) in conjunction with transversely arranged rods as support members (11), which project on either side forming a roller chain (16) and are completely supported and guided with respect to the all-round projecting side walls (12) of the stator (1), wheel disks (14) being located at the reversing points of the caterpillar belt (2) and engaging on either side externally on stator (1) and not participating in the support behaviour and which in known manner are driven by a drive unit (18) and by means of which the roller chains (16) are guided non-positively and whereby the caterpillar belt (2) is connected in revolving liquid-tight manner to the particular side wall (12) of the stator (1).

2. Fluid transport caterpillar according to claim 1, characterized in that a closed pressure-fluid circuit is formed by a pressure-tight system, which comprises the collecting tank (4), circulating pump (20), supply lines (21), cells (3), channels (5), all-round fluid gap (22) between stator (1) and caterpillar belt (2), inlet port (26) and collecting tank (4).

3. Fluid transport caterpillar according to claim 1, characterized in that the channels (5) leading towards the ground-side sliding surface (6) from the pressure-tight cells (3) in the stator (1) are concentrated in the two terminal zones of the ground-side sliding surface (6).

4. Fluid transport caterpillar according to claim 1, characterized in that the endless, flexible caterpillar belt (2) has a homogeneous or cellular structure on the outwardly directed surface of a wear-resistant layer and in the interior.

5. Fluid transport caterpillar according to claim 1, characterized in that the endless, flexible caterpillar belt (2) has on the surface directed towards the stator (1) a honeycomb structure (36), which comprises cupshaped cells, whose cell walls (23) pass in lip-like manner towards the surface.

6. Fluid transport caterpillar according to claims 1 to 5, characterized in that a rigid or movable axle (31) carrying the load is mounted in known manner in the centre of stator (1).

7. Fluid transport caterpillar according to claims 1 to 6, characterized in that there are two parallel caterpillar bodies with known differential drive as a steerable unit.

8. Fluid transport caterpillar according to claims 1 to 7, characterized in that hydraulic oils, emulsions or water are fed in as the fluid.

## Revendications

1. Chenille de transport à fluide présentant un stator (1) rigide à la flexion et au gauchissement, qui correspond à la forme de base de la chenille et au-dessus duquel une bande chenillée (2) sans fin, flexible et étanche aux fluides et à la pression, est tendue sur toute sa largeur ; dans laquelle ce stator (1) entoure des alvéoles (3, 4) étanches à la pression, respectivement récepteurs ou délivreurs de fluide et communiquant, par l'intermédiaire de canaux (5) uniformément répartis sur la largeur du stator, avec la surface de glissement du stator (1) située côté sol ; dans laquelle un film intercalaire périphérique de fluide (22), engendré par le fluide admis sous pression, est formé entre le stator (1) et la bande chenillée (2), le stator (1) renfermant centralement un carter collecteur (4) relié, par l'entremise d'un orifice (26) au film intercalaire de fluide (22) qui est opposé à la surface de fond (7) ; dans laquelle le stator (1) est obturé de part et d'autre, avec étanchéité à la pression, par l'intermédiaire de parois latérales (12) faisant saillie, de toutes parts, d'une valeur moindre que l'épaisseur de la bande chenillée (2) ; dans laquelle la couche de glissement (9) de la bande chenillée (2), tournée vers le stator (1), présente une surface structurée constituée d'alvéoles hydrostatiques, c'est-à-dire des alvéoles ouverts en direction de la face supérieure et munis de parois alvéolaires élastiques (23) ; dans laquelle des armatures connues non rigides, faisant office de supports de consolidation (8), sont noyées à intervalles réguliers dans la bande chenillée flexible (2), en association avec des barrettes agencées transversalement qui font office de corps de soutien (11), font saillie de part et d'autre en formant une chaîne à rouleaux (16), et sont intégralement soutenues et guidées contre les parois latérales (12) du stator (1), en saillie de toutes parts ; dans laquelle des disques de roues (14) ne prenant pas part au processus de support, appliqués de part et d'autre contre l'extérieur du stator (1) et disposés aux points de renvoi de la bande chenillée (2), sont menés de manière connue par un groupe d'entraînement (18) et servent à guider mécaniquement les chaînes à rouleaux (16) ; et dans laquelle la bande chenillée (2) est reliée de part et d'autre à la paroi latérale considérée (12) du stator (1), avec étanchéité circonférentielle aux fluides.

2. Chenille de transport à fluide selon la revendication 1, caractérisée par le fait qu'un circuit fermé de fluide pressurisé est formé par un système tenant la pression et se composant d'un carter collecteur (4), d'une pompe (20) de mise en circulation, de conduits d'amenée (21), d'alvéoles (3), de canaux (5), d'un film intercalaire périphérique de fluide (22) entre le stator (1) et la bande chenillée (2), d'un orifice d'admission (26) et, à nouveau, du carter collecteur (4).

3. Chenille de transport à fluide selon la revendication 1, caractérisée par le fait que les canaux (5) partant des alvéoles (3) étanches à la pression, dans le stator (1), et gagnant la surface de glissement (6) située côté sol, sont disposés de manière concentrée dans les zones extrêmes flanquant la surface de glissement (6) située côté sol.

4. Chenille de transport à fluide selon la revendication 1, caractérisée par le fait que la bande chenillée (2) flexible et sans fin comporte une couche résistant à l'usure sur la surface dirigée vers l'extérieur, et renferme intérieurement une structure homogène ou alvéolée.

5. Chenille de transport à fluide selon la revendication 1, caractérisée par le fait que la bande chenillée (2) flexible et sans fin présente, sur la surface dirigée vers le stator (1), une structure à nids d'abeilles (36) qui consiste en des alvéoles en forme de ventouses, dont les parois alvéolaires (23) s'achèvent à la manière de lèvres en direction de la surface.

6. Chenille de transport à fluide selon les revendications 1 à 5, caractérisée par le fait qu'un axe (31) rigide ou mobile, induisant la charge, est monté de manière connue au centre du stator (1).

7. Chenille de transport à fluide selon les revendications 1 à 6, caractérisée par le fait que deux corps de chenille à entraînement différentiel connu, s'étendant parallèlement, sont installés en tant qu'ensemble unitaire braquable.

8. Chenille de transport à fluide selon les revendications 1 à 7, caractérisée par le fait que des huiles hydrauliques, des émulsions ou de l'eau sont délivrées en tant que fluide.

Fig. 2

Fig.1

Fig. 3

Fig. 4

Fig. 6

20 26 31 15

5 3 4 2 1 7 8

9 1

Fig. 5

10 2 22 6

EP 0 176 758 B1

Fig. 7

Fig. 8

EP 0 176 758 B1

## Fig. 9

12

3

1

5

11

28    22    9

EP 0 176 758 B1

36

Fig. 10.3

Fig. 10.1

Fig. 10.2

Fig. 10.

EP 0 176 758 B1

Fig.11

P

22

30

25

B

38 P$_x$-konstant

EP 0 176 758 B1

Fig. 12

EP 0 176 758 B1

34

35

20

18

14

32    31    35    32